## Europäisches Patentamt
## European Patent Office
## Office européen des brevets

(11) Veröffentlichungsnummer: **0 003 216**
**B1**

(12) **EUROPÄISCHE PATENTSCHRIFT**

(45) Veröffentlichungstag der Patentschrift: 25.11.81

(51) Int. Cl.³: **C 02 F 11/06, F 23 G 7/00**

(21) Anmeldenummer: **78101474.1**

(22) Anmeldetag: **29.11.78**

(54) **Verfahren und Vorrichtung zur thermischen Behandlung von wässrigen Schlämmen insbesondere von Klärschlämmen.**

(30) Priorität: **01.12.77 DE 2753537**

(43) Veröffentlichungstag der Anmeldung:
**08.08.79 Patentblatt 79/16**

(45) Bekanntmachung des Hinweises auf die Patenterteilung:
**25.11.81 Patentblatt 81/47**

(84) Benannte Vertragsstaaten:
**BE CH FR GB LU NL SE**

(56) Entgegenhaltungen:
DE - A - 1 459 487
DE - A - 1 800 961
DE - A - 2 150 414
DE - A - 2 422 814
DE - A - 2 645 150
US - A - 3 926 129

(73) Patentinhaber: **Saarberg-Fernwärme GmbH**
**Sulzbachstrasse 26**
**D-6600 Saarbrücken (DE)**

(72) Erfinder: **Moskau, Gerhard, Ing. grad.**
**Jahnstrasse 48**
**D-6602 Saarbrücken-Dudweiler (DE)**

Courier Press, Leamington Spa, England.

# Verfahren und Vorrichtung zur thermischen Behandlung von wäßrigen Schlämmen, insbesondere von Klärschlämmen

Die Erfindung bezieht sich auf ein Verfahren zur thermischen Behandlung von wäßrigen Schlämmen und darin enthaltenen brennbaren Abfallstoffen, insbesondere von Klärschlämmen, die Müll enthalten können, wobei die Schlämme unter Verwendung der Verbrennungswärme durch indirekten Wärmetausch thermisch eingedickt werden und anschließend bei erhöhter Temperatur einer Oxidation, z.B. einer Verbrennung, Verschwelung oder Vergasung unterworfen werden, sowie auf eine Vorrichtung zur Durchführung des Verfahrens.

Bei bekannten Behandlungsverfahren für Klärschlamm wird Frischschlamm oder ausgefaulter Schlamm auch unter Verwendung von Filterhilfsmitteln mechanisch entwässert und abgelagert. Ein großer Teil der im Klärschlamm gelösten Salze gelangt hierbei mit dem abfiltrierten Wasser in den Vorfluter. Diese Salze sind dadurch einerseits für den weiteren Behandlungsprozeß des Klärschlammen verlorengegangen und tragen andererseits zu einer unerwünschten Eutrophierung der Gewässer bei. Nachteilig ist auch, daß für die Lagerung eine Deponie benötigt wird, zu welcher der entwässerte Schlamm transportiert werden muß. Nachteilig ist ferner eine möglicherweise entstehende Geruchsbelästigung.

Es wurde deshalb auch bereits entwässerter Klärschlamm verbrannt und die Abwärme zur Dampferzeugung, für die Trocknung oder für die thermische Konditionierung des Schlammes verwendet. Nachteilig ist, daß nur ein geringer Teil der in der Trockenmasse des Schlammes vorhandenen Energie bei den der Schlammverbrennung vor- oder nachgeschalteten Anlagenteilen ausgenutzt wird.

Darüberhinaus sind sogenannte Naßverbrennungs- oder Naßoxidationsverfahren bekannt geworden, bei denen die Verbrennung von wäßrigen Schlämmen flammenlos und ohne vorherige Eindickung des Schlammes unter erhöhter Temperatur, jedoch unterhalb der kritischen Temperatur des Wassers, und unter erhöhtem Druck erfolgt.

Bei diesem Verfahren entsteht aufgrund der thermodynamischen Bedingungen im Reaktor selbst kein Dampf, so daß das flüssige Reaktionsprodukt zum Zwecke der Abtrennung von Verbrennungsprodukten und zur Gewinnung von Dampf erst entspannt und dann in einem dem Reaktor nachgeschalteten Abscheider einer Phasentrennung unterzogen werden muß (bekanntgemachte Patentanmeldung St 2017/IVc/85 c; DE—A—2617340; Meinck, "Industrie-Abwässer", 4. Auflage 1968, S.143—144).

Bei diesen bekannten Verfahren erweist sich somit die Aufarbeitung der entstandenen Verbrennungsprodukte als aufwendig. In den meisten Fällen müssen sie wegen der bei der Verbrennung entstandenen Kohlenwasserstoffe noch einer kostenintensiven Nachbehandlung unterzogen werden.

Aus der DE—A—2 304 273 ist ein Verfahren zur Behandlung sulfidhaltiger Abwässer bekannt geworden, bei dem die Abwässer mit einem Brennstoff vermischt und in einem Reaktor bei erhöhter Temperatur und erhöhtem Druck in Synthesegas umgesetzt werden. Das aus dem Reaktor austretende heiße Synthesegas wird gequencht, gewaschen und dann in seine Bestandteile zerlegt.

Aus der DE—A—1 800 961 ist ein Verfahren zur gemeinsamen Verbrennung von Müll und Klärschlamm bekannt, bei dem die Verbrennungsgase in einen Wärmetauscher eingeleitet werden, in dem der Schlamm eingedickt wird. Nachteilig ist bei diesem bekannten Verfahren, daß die gesamte im Ofen aufgewandte Wärme zur Verdampfung des Schlammwassers (Verdampfungswärme) vollständig verlorengeht, da dieses dampfförmig über eine Abgasleitung in die Atmosphäre entlassen wird.

Bekannt ist auch die Eindickung von Schlamm über Mehrstufenwärmeaustauscher, bei denen der bei der Eindickung anfallende Wasserdampf in einer vorgeschalteten Eindickstufe verwendet wird. Nachteilig ist, daß die erste Eindickstufe über einen Zwischenwärmeträgerkreislauf beheizt wird.

Aufgabe der Erfindung ist es, ein Verfahren zu schaffen, bei dem Schlämme, die in der Trockensubstanz oxidierbar sind, in ihrer wäßrigen Dispersion so behandelt werden, daß die im Schlamm enthaltene, bei der Oxidation freiwerdende Energie so gut wie vollständig ausgenutzt wird, so daß die gesamte thermische Behandlung des Schlammes einschließlich der Eindickung möglichst ohne die Verwendung von zusätzlichem Brennstoff allein mit der bei der Oxidation des Schlammes gewonnenen Wärmeenergie vollzogen werden kann.

Ferner sollen die im unbehandelten Schlamm gelösten Salze im Verlauf der thermischen Behandlung im Restwasser des entwässerten Schlammes erhalten bleiben.

Bei einem Verfahren der eingangs genannten Art wird dies erfindungsgemäß dadurch erreicht, daß die Oxidation unter Überdruck in einem druckfesten Ofen erfolgt, daß die in dem hierbei anfallenden, unter Überdruck stehenden Wasserdampf-Gasgemisch enthaltene fühlbare Wärme und Kondensationswärme in nachgeschalteten Wärmetauschern ausgekoppelt und in diesen ohne Zuhilfenahme eines Zwischenwärmeträgerkreislaufes zur Vorwärmung des Oxidationsmittels, beispielsweise Sauerstoff, Luft oder ein Luft-Sauerstoffgemisch beliebiger Zusammensetzung, zur Schlammvorwärmung und zur Schlammeindickung herangezogen werden, und daß die bei der thermischen Eindickung anfallenden Phasen getrennt abgezogen und einer weiteren Verwertung zugeführt werden.

Vorteilhafterweise erfolgt die thermische Eindickung der Schlämme in mehreren Stufen, wobei der bei der Eindickung in einer Stufe anfallende Wasserdampf zur Eindickung in einer vorgeschalteten Stufe verwendet wird. Dabei wird der bei der Eindickung anfallende Wasserdampf im Wärmetausch mit anzuwärmendem Schlamm abgekühlt oder kondensiert. Auch der kondensierte Wasserdampf enthält noch Restwärme, die für die thermische Behandlung des Schlammes durch Wärmetausch ausgenutzt werden kann. Aus den unter Druck stehenden Medien kann noch Energie zurückgewonnen werden, indem man Entspannungsmaschinen einsetzt.

Ein großer Vorteil des Verfahrens nach der Erfindung besteht darin, daß die Wärmeenergie für die einzelnen Verfahrensschritte der thermischen Behandlung vollständig aus der bei der Oxidation des Schlammes freiwerdenden Energie gewonnen wird und daß diese Energie durch Kondensation des im Wasserdampf-Gasgemisch enthaltenen Wasserdampfes auch vollständig ausgenutzt wird.

Ferner werden infolge der thermischen Behandlung des einzudickenden Schlammes Fällmittel eingespart. Auch können vorteilhafterweise Mittel zur Schadstoffbindung zugegeben werden, um beispielsweise die Asche direkt deponierfähig zu machen oder saubere Gase bei der Oxidation zu erzeugen. Die im Schlammwasser gelösten Salze verbleiben im Restwasser des thermisch eingedickten Schlammes, so daß sowohl die einen zu einer höheren Salzkonzentration beitragen als auch die anderen, z.B. die Natrium- und Magnesiumverbindungen, einen Aufschluß bewirken können. Eine Aufschlußmittelzugabe wird dadurch verringert oder ganz überflüssig. Auch die Asche des verbleibenden Schlammes ist dann salzreich und aufgeschlossen und somit beispielsweise für Düngemittelzwecke überaus gut geeignet.

Eine Vorrichtung zur Durchführung des erfindungsgemäßen Verfahrens ist dadurch gekennzeichnet, daß ein Dünnschichtverdampfer schlammseitig mit einem Ofen und dieser gasseitig mit dem Heizraum des Dünnschichtverdampfers verbunden ist.

Die Erfindung wird anhand eines schematisch dargestellten Ausführungsbeispieles näher erläutert.

Schlamm aus einer Kläranlage mit 95 % Wassergehalt wird mittels einer Pumpe 16 über Wärmetauscher 14 und 17 in einen Voreindicker und/oder einen Siebabscheider 1 gefördert, setzt sich am Boden des Voreindickers ab und gelangt über einen Schlammzerkleinerer 20, eine Pumpe 21 und einen Wärmetauscher 18 in den Verdampferraum 11' eines Dünnschichtverdampfers 2, von dessen Boden er abgezogen und über eine Pumpe 9 durch einen Wärmetauscher 7 in einen Ofen 3 gelangt, wo er oxidiert wird, d.h. entweder verbrannt, verschwelt (entgast) oder vergast wird.

Im Wärmetauscher 7 wird der für den Ofen 3 bestimmte Brennschlamm auf ca. 200 °C angewärmt.

Das Wasserdampf-Gasgemisch geht durch einen Wärmetauscher 5, eine Leitung 8, den Wärmetauscher 7 und einen Filter 10 in den Heizraum 11 des Dünnschichtverdampfers 2 und gibt seine Wärme an den im Verdampferraum 11' befindlichen Schlamm ab. Dabei kondensiert der Dampf, während das Gas über einen Filter 12 und eine Entspannungsmaschine 13 ins Freie geleitet wird. Auch der kondensierte Wasserdampf in dem Heizraum 11 des Dünnschichtverdampfers 2 hat bei einem Überdruck von ca. 20 bar noch eine Temperatur von ca. 170 °C und wird in den Wärmetauscher 14 zur Vorwärmung des Schlammes geführt und dann in einer nachgeschalteten Entspannungsmaschine 15 entspannt und abgeleitet.

Der Filter 10 in der Leitung 8 entfernt Asche, Staub und Sand aus dem aus dem Ofen 3 entweichenden Wasserdampf-Gasgemisch.

Der Schlamm im Dünnschichtverdampfer 2 siedet bei ca. 150 °C und ca. 3 bar Überdruck und entwickelt Dampf, der in den Wärmetauschern 17 und 18 den Schlamm vor dem Voreindicker 1 bzw. vor dem Dünnschichtverdampfer 2 vorwärmt und in nachgeschalteten Entspannungsmaschinen 19 bzw. 22 als Dampf oder Kondensat entspannt wird. Ein Teil des überschüssigen Dampfes kann auch in einem Anschluß 23 abgezogen und nutzbar gemacht werden.

Durch die Erhitzung des Schlammes fallen im Schlammwasser gelöste Stoffe (z.B. Eiweiß) aus, so daß wenig oder kein Fällmittel verwendet werden muß.

Es kann dem Schlamm zusätzlich ein Mittel zugeführt werden, das Schadstoffe, insbesondere Schwefel oder Schwermetalle bindet.

Die Asche wird durch einen Abzug 4 abgezogen. Alle Salze des unbehandelten Schlammes aus der Kläranlage sind noch in der Asche enthalten, die sich gut als landwirtschaftlicher Dünger verwerten läßt. Werden dem Schlamm vor oder während der Oxidation ein oder mehrere Aufschlußmittel zugegeben, so werden die Phosphate und andere Düngemittelkomponenten in der Asche dadurch in höherem Maße wasser- bzw. zitronensäurelöslich und können von Pflanzen gut aufgenommen werden. Auch bewirken andere im Restwasser des Schlammes enthaltene Salze einen Aufschluß.

Für den Oxidationsvorgang können übliche Brennstoffe, Altöl oder Abfälle eingespeist werden, um das Verfahren einerseits zu optimieren oder um andererseits weitere Abfälle wirtschaftlich zu beseitigen oder einem Wiederverwendungszweck zuzuführen. Es ist denkbar, Brennstoffe, Altöl, Altreifen, Müll oder weitere Abfälle, gegebenenfalls nach entsprechender Aufbereitung, vorwiegend oder allein dem Verfahren nach der Erfindung zu unterziehen.

Ferner ist es möglich, Waschflüssigkeit aus einer Gasreinigungsanlage ähnlich wie die Schlämme in dem erfindungsgemäßen Verfahren zu behandeln.

Wichtiger als diese technischen Varianten ist jedoch bei diesem Ausführungsbeispiel die vollständige Verbrennung bei Sauerstoffüberschuß.

Das Gas und der aus dem Schlammrestwasser bei der Verbrennung entstehende Wasserdampf verlassen den Ofen 3 bzw. den Oxidationsraum über die Leitung 8 und geben einen Teil ihrer Wärme in dem Wärmetauscher 5 an die Verbrennungsluft ab, die dabei auf ca. 800 °C aufgeheizt wird.

Anstelle von Verbrennungsluft kann auch Sauerstoff oder eine beliebige Sauerstoff-Luft-Mischung in den Ofen 3 nach Vorwärmung im Wärmetauscher 5 eingeblasen werden.

Neben der Verbrennung ist auch ein Verschwelen (Entgasen) des Schlammes im Ofen 3 möglich.

Das entstehende Gas kann nach geeigneter Reinigung als Brenn- oder Synthesegas genutzt werden.

Ebenso ist eine Vergasung des Schlammes möglich.

Im Ofen 3 wird bei einem Druck von ca. 20 bar und einer Temperatur von ca. 1000 °C der Schlamm mit einem Wassergehalt von ca. 80 % verbrannt. Dabei entstehen Gase, Wasserdampf und Asche.

Der Ofen 3 ist druckfest ausgebildet. Er kann beispielsweise als Muffelofen, Schmelzkammerofen, Schachtofen oder Wirbelschichtofen ausgebildet sein. Als Wirbelbett kann Sand oder granulierte Asche verwendet werden.

Der Erfindungsgedanke beschränkt sich nicht auf das dargestellte Ausführungsbeispiel, sondern umfaßt auch Behandlungsanlagen für andere Schlämme, beispielsweise Industrieschlämme, die in der Trockensubstanz oder im Schlamm brennbare Stoffe enthalten oder denen brennbare Stoffe zugegeben werden.

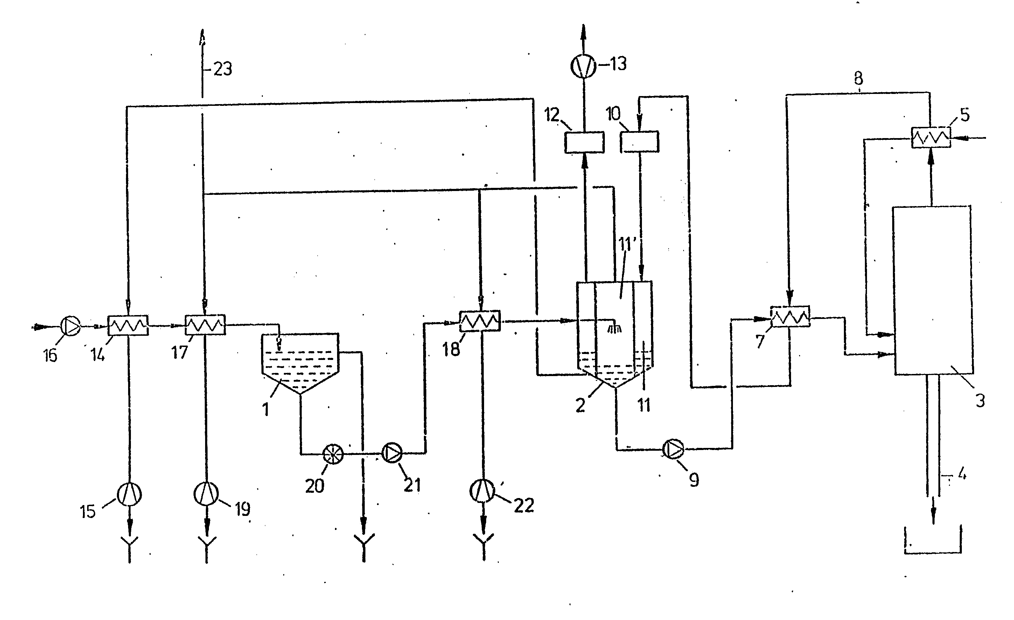

**Patentansprüche**

1. Verfahren zur thermischen Behandlung von wäßrigen Schlämmen und darin enthaltenen brennbaren Abfallstoffen, insbesondere von Klärschlämmen, die Müll enthalten können, wobei die Schlämme unter Verwendung der Verbrennungswärme durch indirekten Wärmetausch thermisch eingedickt werden und anschließend bei erhöhter Temperatur einer Oxidation, z.B. einer Verbrennung, Verschwelung oder Vergasung unterworfen werden, dadurch gekennzeichnet, daß die Oxidation unter Überdruck in einem druckfesten Ofen erfolgt, daß die in dem hierbei anfallenden, unter Überdruck stehenden Wasserdampf-Gasgemisch enthaltene fühlbare Wärme und Kondensationswärme in nachgeschalteten Wärmetauschern ausgekoppelt und in diesen ohne Zuhilfenahme eines Zwischenwärmeträgerkreislaufes zur Vorwärmung des Oxidationsmittels, beispielsweise Sauerstoff, Luft oder ein Luft-Sauerstoffgemisch beliebiger Zusammensetzung, zur Schlammvorwärmung und zur Schlammeindickung Zusammensetzung, zur Schlammvorwärmung und zur Schlammeindickung herangezogen werden, und daß die bei der thermischen Eindickung anfallenden Phasen getrennt abgezogen und einer weiteren Verwertung zugeführt werden.

2. Verfahren nach Anspruch 1, dadurch gekennzeichnet, daß der bei der Eindickung anfallende Wasserdampf (Brüden) zur Eindickung in einer vorgeschalteten Eindickstufe und/oder zur Schlammvorwärmung genutzt wird.

3. Verfahren nach Anspruch 1 oder 2, dadurch gekennzeichnet, daß das bei der Eindickung anfallende Kondensat zur Schlammvorwärmung genutzt wird.

4. Verfahren nach einem der Ansprüche 1 bis 3, dadurch gekennzeichnet, daß die Energie des bei der Eindickung abgetrennten Gases in einer oder mehreren Entspannungsmaschinen ausgenutzt wird.

5. Verfahren nach einem der Ansprüche 1 bis 4, dadurch gekennzeichnet, daß man dem Schlamm ein oder mehrere Mittel zur Schadstoffbindung, Düngemittelbildung oder Fällung zugibt.

6. Verfahren nach einem der Ansprüche 1 bis 5, dadurch gekennzeichnet, daß man dem Schlamm brennbare Stoffe, z.B. Altreifen, Altöl oder sonstige Brennstoffe, ggf. nach entsprechender Aufbereitung, in beliebiger Mischung zugibt.

7. Verfahren nach einem der Ansprüche 1 bis 6, dadurch gekennzeichnet, daß die Energien der unter Druck stehenden Medien in Entspannungsmaschinen ausgenutzt werden.

8. Vorrichtung zur Durchführung des Verfahrens nach einem der Ansprüche 1 bis 7, dadurch gekennzeichnet, daß ein Dünnschichtverdampfer (2) schalmmseitig mit einem Ofen (3) und dieser gasseitig mit dem Heizraum (11) des Dünnschichtverdampfers (2) verbunden ist.

**Claims**

1. A process for the thermal treatment of aqueous sludges and combustible waste materials contained therein, in particular sewage sludges, which may contain refuse, wherein the sludges are thermally thickened using the heat of combustion by means of indirect heat exchange and are subsequently subjected to an oxidation step, e.g. a combustion, low-temperature carbonization or gasification step, at an increased temperature, characterised in that the oxidation step takes place under pressure in a furnace which is resistant to pressure, that the sensible heat and the heat of condensation contained in the steam gas mixture under pressure which is thereby produced, are removed in subsequent heat exchangers and used for preheating the oxidizing agents, for example, oxygen, air or an air-oxygen mixture of any composition, for preheating the sludge and for sludge thickening without the aid of an intermediate heat carrier cycle, and that the phases formed during the thermal thickening are separately removed and fed to a further utilization process.

2. A process as claimed in Claim 1, characterised in that the steam which is formed during the thickening step is used for thickening in a preceding thickening stage and/or for sludge preheating.

3. A process as claimed in Claim 1 or Claim 2, characterised in that the condensate formed during the thickening step is used for sludge preheating.

4. A process as claimed in one of Claims 1 to 3, characterised in that the energy of the gas which is separated during the thickening step is made use of in one or more expansion engines.

5. A process as claimed in one of Claims 1 to 4, characterised in that one or more agents for the binding of pollutants for the production of fertilizers, or for precipitation, is or are added to the sludge.

6. A process as claimed in one of Claims 1 to 5, characterised in that combustible materials, e.g. used tyres, waste oil or other combustibles are added to the sludge in any desired admixture, if necessary after appropriate processing.

7. A process as claimed in one of Claims 1 to 6, characterised in that the energies of the media which are under pressure are utilized in expansion engines.

8. Apparatus for carrying out the process as claimed in one of Claims 1 to 7, characterised in that a thin-film evaporator (2) is connected to a furnace (3) on the sludge side, and the furnace is connected to the heating space (11) of the thin-film evaporator (2) on the gas side.

**Revendications**

1. Procédé pour le traitement thermique de boues aqueuses et des produits de déchets combustibles contenus dans ces boues, notamment de boues de curage contenant des ordures, les boues étant épaissies en utilisant la chaleur de combustion par échange thermique indirect et étant ensuite soumises à température plus élevée à une oxydation, par exemple à une combustion, une carbonisation ou une gazéification, caractérisé en ce que l'oxydation a lieu sous surpression dans un four résistant à la pression, en ce que la chaleur sensible et la chaleur de condensation contenues dans le mélange de gaz et de vapeur ainsi produit, sous surpression, est reprise dans des échangeurs de chaleur montés à la suite et est utilisée dans ceux-ci, sans l'aide d'un circuit caloporteur intermédiaire pour réchauffer l'agent d'oxydation, par exemple l'oxygène, l'air ou un mélange d'air et d'oxygène de composition quelconque, pour le réchauffage des boues et pour l'épaississement des boues, et en ce que les phases produites lors de l'épaississement thermique sont extraites à part envoyées à une autre récupération.

2. Procédé selon revendication 1, caractérisé en ce que la vapeur d'eau produite pendant l'épaississement (vapeur chaude) est utilisée pour l'épaississement dans un étage d'épaississement préalable et/ou pour le réchauffage des boues.

3. Procédé selon revendication 1 ou 2, caractérisé en ce que le condensat produit lors de l'épaississement est utilisé pour le réchauffage des boues.

4. Procédé selon l'une des revendications 1 à 3, caractérisé en ce que l'énergie des gaz séparés pendant l'épaississement est utilisée dans une ou plusieurs machines à détente.

5. Procédé selon l'une des revendications 1 à 4, caractérisé en ce qu'on ajoute à la boue un ou plusieurs agents pour combinaison avec des produits nocifs, pour formation d'engrais ou précipitation.

6. Procédé selon l'une des revendications 1 à 5, caractérisé en ce qu'on ajoute à la boue des matières combustibles, par exemple des pneumatiques usagés, de l'huile usagés ou d'autres combustibles, le cas échéant après préparation appropriée, en mélange quelconque.

7. Procédé selon l'une des revendications 1 à 6, caractérisé en ce que les énergies des milieux sous pression sont utilisées dans des machines à détente.

8. Installation pour la mise en application du procédé suivant l'une des revendications 1 à 7, caractérisée en ce qu'un évaporateur à couche mince (2) est relié à un four (3) côté boues et celui-ci est relié côté gaz à la chambre de chauffage (11) de l'évaporateur à couche mince (2).

0 003 216